Europäisches Patentamt

European Patent Office

Office européen des brevets

(19)

(11) Veröffentlichungsnummer : **0 101 668**
**B1**

(12)

# EUROPÄISCHE PATENTSCHRIFT

(45) Veröffentlichungstag der Patentschrift :
30.12.86

(21) Anmeldenummer : 83810362.0

(22) Anmeldetag : 15.08.83

(51) Int. Cl.⁴ : **C 09 D   5/28**, C 09 D   7/12

(54) **Einbrennlacke mit Graphit.**

(30) Priorität : 20.08.82 CH 4981/82

(43) Veröffentlichungstag der Anmeldung :
29.02.84 Patentblatt 84/09

(45) Bekanntmachung des Hinweises auf die Patenterteilung : 30.12.86 Patentblatt 86/52

(84) Benannte Vertragsstaaten :
BE CH DE FR GB IT LI NL SE

(56) Entgegenhaltungen :
DE-A- 3 135 810
FR-A- 2 310 393
FR-A- 2 388 868
US-A- 4 081 423
Dr. HANS KITTEL: "Lehrbuch der Lacke und Beschichtungen", Band II, Pigmente, Füllstoffe, Farbstoffe, 1974, Verlag W.A. Colomb, Berlin, DE, Seiten
245-249, Absatz 3.2.10.1; Seiten 436-442, Absatz
3.3.7.1.

(73) Patentinhaber : CIBA-GEIGY AG
Klybeckstrasse 141
CH-4002 Basel (CH)

(72) Erfinder : Bäbler, Fridolin, Dr.
Route du Couchant 12
CH-1723 Marly (CH)
Erfinder : Weissmüller, Adolf
Vogesenstrasse 32
CH-7842 Kandern (CH)

EP 0 101 668 B1

Jouve, 18, rue St-Denis, 75001 Paris, France

### Beschreibung

Es ist gemäss US-PS Nr. 4,081,423 bekannt, dekorative Ueberzugskompositionen enthaltend ein organisches Bindemittel, ein Metallpulver einer bestimmten Korngrösse, wie Kupfer, Bronze, Eisen, Zinn, Zink und edle Metalle, und eine bestimmte Menge Graphit zur Erzielung eines metallischen Effektes einzusetzen. Auch die französische Patentanmeldung Nr. 2,388,868 befasst sich u. a. mit Dekorationsüberzügen zur Erzielung von metallischen Effekten, wobei ein filmbildendes Polyesterharz, Mikropartikeln eines Polymers und gegebenenfalls Pigmente, wie Russ und/oder ein metallisches Pigment, wie Al, Cu, Sn oder Ni, verwendet werden.

Es wurde gefunden, dass man bei der Herstellung von gefärbten Einbrennlacken durch Zugabe von Graphit einen gleichmässigen, sehr feinen Metallic-Effekt von hoher Reinheit erzielen kann. Dies ist umso überraschender, als mit Graphit bekanntlich trübe und verschmiert wirkende Ausfärbungen erhalten werden. Wegen der guten Deckkraft des Graphits können sehr dünne Lackschichten hergestellt werden. Graphit ist ohne besonderen Aufwand in hoher Feinheit erhältlich und setzt sich in der Lackschicht nicht ab, so dass eine gute Lagerbeständigkeit des lackierten Substrates erzielt wird. Die Zugabe von Graphit ist sehr wirtschaftlich, toxikologisch unproblematisch, und beeinträchtigt weder die Lagerstabilität noch die Hitze-, Licht- und Wetterechtheiten des Lackes. Graphit ist in Lacken sehr leicht verteilbar und wirkt auf diese auch in keiner Weise zersetzend.

Die Erfindung betrifft eine Einbrennlackeffektschicht mit einem Metallic-Effekt ohne Mitverwendung von Metallteilen, dadurch gekennzeichnet, dass sie 0,001 bis 30 Gew.-% von einem oder mehreren organischen Pigmenten oder polymerlöslichen Farbstoffen und 0,001 bis 30 Gew.-% Graphit, bezogen auf die trockene Lackschicht, enthält.

Als Einbrennlacke eignen sich die üblichen bei erhöhter Temperatur reagierenden Bindemittel, wie z. B. Acryl-, Alkyd-, Epoxy-, Phenol-, Melamin-, Harnstoff-, Polyester-, Benzoguanamin- oder Celluloseesterharze oder Kombinationen davon. Bevorzugt verwendet man die in der Automobilindustrie gebräuchlichen Einbrennlacke, wie insbesondere Acryl-Melamin-, Alkyd-Melamin- oder thermoplastische Acrylharze.

Die Einbrennlackeffektschicht weist bevorzugt eine Dicke von 3-60 μm, insbesondere von 7 bis 25 μm auf und ist in der Regel einschichtig.

Die Effektschicht kann mit einer oder mehreren Klarlackschichten überzogen sein. Für den Klarlack werden als Bindemittel bevorzugt hitzehärtbare Acryl-Melaminharzkombinationen eingesetzt, wie sie an sich auf dem Gebiet der Automobillackierung bekannt sind. Die Klarlackschicht hat eine Dicke von vorzugsweise 30 bis 60 μm.

Als Graphite eignen sich sowohl Natur- wie Kunstgraphite. Bei Naturgraphiten kann der Kohlenstoffanteil stark variieren. Man bevorzugt jedoch jene Naturgraphite, deren Kohlenstoffgehalt mindestens 70 % beträgt. Die im Naturgraphit vorhandenen Verunreinigungen, wie Kieselsäure, Tonerde oder Eisenoxide können nur soweit toleriert werden, als sie die Beständigkeit des zu färbenden Substrates oder die Echtheiten des anderen Pigmentes oder Farbstoffes nicht ungünstig beeinflussen. In der Regel bevorzugt man Graphite mit einem hohen Kohlenstoffgehalt, insbesondere von mindestens 99 %. Im allgemeinen sind daher Kunstgraphite bevorzugt.

Bezüglich Teilchenbeschaffenheit des Graphits bevorzugt man kristallinen Graphit mit einem Teilchendurchmesser von insbesondere weniger als 100 μm. Besonders bevorzugt verwendet man einen Graphit, der in Schuppen- oder Plättchenform mit einem Durchmesser von bis zu 20 μm und einer Dicke von bis zu 4 μm vorliegt.

Die optimalen optischen Effekte lassen sich durch Variieren der Graphitmenge innerhalb des angegebenen Bereiches festlegen. Bevorzugt verwendet man 1,0 bis 15,0 Gew.-% Graphit bezogen auf die trockene Lackschicht.

Als organische Pigmente kommen sowohl deckende wie transparente Pigmente in Frage.

Beispiele von organischen Pigmenten sind Azo-, Azomethin-, Methin-, Anthrachinon-, Phthalocyanin-, Perinon-, Perylen, Dioxazin-, Thioindigo-, Iminoisoindolin-, Iminoisoindolinon-, Chinacridon-, Flavanthron-, Indanthron-, Anthrapyrimidin- oder Chinophthalonpigmente, ferner Metallkomplexe von z. B. Azo-, Azomethin- oder Methinfarbstoffen. Diese Pigmente eignen sich insbesondere für die Herstellung von Automobillacken.

Als Farbstoffe eignen sich insbesondere Phthalocyaninfarbstoffe oder Metallkomplexe von Azofarbstoffen, vor allem 1 : 2-Chrom- oder 1 : 2-Kobaltkomplexe von Monoazofarbstoffen, ferner auch Fluoreszenzfarbstoffe, wie solche aus der Cumarin-, Naphthalimid-, Pyrazolin-, Acridin-, Xanthen-, Thioxanthen-, Oxazin-, Thiazin- oder Benzthiazolreihe. Metallkomplexe von Azofarbstoffen sind jedoch bevorzugt.

Die erfindungsgemässen Einbrennlacke enthalten neben dem Graphit bevorzugt nur ein organisches Pigment oder nur einen Farbstoff, insbesondere ein organisches Pigment, vor allem ein transparentes organisches Pigment.

In den erfindungsgemässen Einbrennlacken liegt das organische Pigment oder der Farbstoff bevorzugt in Mengen von 1,0 bis 15,0 Gew.-% bezogen auf die trockene Lackschicht vor.

Graphit in der bevorzugten Teilchenbeschaffenheit ausgehend von grobkristallinem Graphit lässt sich auf bekannte Art erhalten, wie beispielsweise durch Mahlen in Luftstrahl-, Sand- oder Kugelmühlen. Man zerkleinert den Graphit jedoch bevorzugt unter solchen Bedingungen, in welchen die anisotropen Eigenschaften des Graphits in bezug auf die Abspaltbarkeit von Schichtebenen zur Geltung kommen. So erhält man ausgeprägt flächige, plättchen- oder schuppenförmige Graphitteilchen, beispielsweise durch Nassmahlung von grobkristallinem Graphit in einer Mahlvorrichtung, die Metall-, Glas- oder Porzellankugeln, Kunststoffgranulat oder Sandkörner als Mahlkörper enthält. Diese Mahlkörper werden dabei beispielsweise durch Rotation des Gefässes, oder durch Schwingungserzeuger oder Rührer in Bewegung gesetzt.

Es kann von Vorteil sein, Pigment, Farbstoff und/oder Graphit vor der Verwendung für die erfindungsgemässe Stoffzusammensetzung mit einem Texturschutzmittel zu behandeln. Bevorzugt verwendet man einen Graphit, der mit einem Texturschutzmittel behandelt wurde, beispielsweise vor, während oder nach der Zerkleinerung. Dabei verwendet man bevorzugt 0,02 bis 25 Gew.-% Texturschutzmittel bezogen auf die eingesetzte Graphitmenge.

Geeignete Texturschutzmittel sind beispielsweise Fettsäuren mit mindestens 12 C-Atomen, wie Stearinsäure oder Behensäure, deren Amide, Salze oder Ester, wie Magnesiumstearat, Zinkstearat, Aluminiumstearat oder Magnesiumbehenat, ferner quartäre Ammoniumverbindungen, wie Tri-$(C_1\text{-}C_4)$-alkylbenzylammoniumsalze, ferner Weichmacher, wie epoxidiertes Sojabohnenöl, Wachse, wie Polyäthylenwachs, Harzsäuren, wie Abietinsäure, Kolophoniumseife, hydriertes oder dimerisiertes Kolophonium, $C_{12}\text{-}C_{18}$-Paraffindisulfonsäuren, Alkylphenole, Alkohole, Diode oder Polyole mit mindestens 8 C-Atomen.

Die erfindungsgemässe Stoffzusammensetzung enthält bevorzugt einem mit Stearinsäure, Stearylamin, hydrierter Abietinsäure, epoxidiertem Sojabohnenöl oder einem 1,2-Diol, insbesondere mit Octandiol-(1,2) oder Dodecandiol-(1,2) behandelten Graphit.

Zur Herstellung der Einbrennlackeffektschichten können Graphit und organisches Pigment bzw. Farbstoff einzeln oder vorgemischt nach bekannten Methoden in das Bindemittel eindispergiert werden. Dabei können weitere nichtflüchtige Bestandteile zugegeben werden, wie Weichmacher, Hilfsstoffe, Füllstoffe, Lichtschutzmittel, Hitzestabilisatoren, Antioxidantien und anorganische Pigmente. Der homogenisierte Lack kann beispielsweise durch Streichen, Rollen, Spritzen, Tauchen oder Walzen (Coil-Coating) auf dem Substrat aufgetragen und eingebrannt werden.

Die Klarlackschicht kann ebenfalls nach bekannten Verfahren hergestellt werden und kann zudem Zusatzstoffe, wie Lichtschutzmittel und Antioxidantien enthalten.

Mit den feinkristallinen schuppen- bzw. plättchenförmigen Graphitpartikeln in der erfindungsgemässen Einbrennlackschicht erzielt man einen Metallic-Effekt mit einem feinen, gleichmässig schimmernden Glanz. Der Metallic-Effekt ist besonders ausgeprägt, wenn die erfindungsgemässe Lackschicht von direktem Licht aus einer künstlichen Lichtquelle oder von der Sonne beschienen wird. Dabei wird das Licht teilweise an den im Lack vorhandenen Graphitpartikeln reflektiert, was sich in einem deutlich erkennbaren Glitzern äussert und zu einer stark ausgeprägten diffusen Streuung führt. Dieser besondere Glanzeffekt kann beispielsweise mit einem Goniophotometer gemessen werden.

Die Verwendung von Graphit für die erfindungsgemässe Einbrennlackschicht ist wirtschaftlich. Die Hitze-, Licht- und Wetterechtheit von Graphit selbst wie von der erfindungsgemässen Einbrennlackschicht sind ausgezeichnet. Graphit lässt sich zudem sehr gut in das Trägermaterial einarbeiten und verursacht nur eine geringe Abnützung der Apparaturen und eine geringe Bremswirkung. Graphit setzt sich aufgrund seiner idealen Dichte auch nach längerem Stehenlassen nicht ab. Vor allem erhält man gleichmässige Färbungen.

Die erfindungsgemässen Einbrennlackschichten mit Metallic-Effekt werden hauptsächlich zum Färben von Metalloberflächen, insbesondere in der Automobilindustrie (Car-finishes), verwendet.

In den folgenden Beispielen bedeuten Teile, sofern nicht anders angegeben, Gewichtsteile.

Beispiel 1

3 Teile LONZA Graphit KS 2.5® und 3 Teile Cu-Phthalocyaninpigment C.I. Pigment Blau 15 : 3 werden in 20 Teilen Lösungsmittel der folgenden Zusammensetzung eingerührt : 50 Teile Solvesso® (Gemisch aromatischer Kohlenwasserstoffe, ESSO), 15 Teile Butylacetat, 5 Teile Exkin II® (Verlaufmittel auf Ketoximbasis), 25 Teile Methylisobutylketon, 5 Teile Silikonöl (1 % in Solvesso 150®). Nachdem die vollständige Feinverteilung erreicht ist, werden 48,3 Teile Baycryl L 530® (Acrylharz, 51 %-ig in Xylol/Butanol 3 : 1) und 23,7 Teile Maprenal TTX® (Melaminharz, 55 %-ig in Butanol) zugesetzt. Nach kurzem Homogenisieren wird der Lack durch Spritzen appliziert und während 30 Minuten bei 130 °C eingebrannt. Die erhaltenen Lackschichten weisen eine metallisch schimmernde blaue Färbung mit ausgezeichneten Echtheiten auf und zeichnen sich durch einen sehr guten Verlauf und ausgezeichnete Verteilung der Pigmente aus.

Beispiel 2

a) In einer 500 Vol.-Teile fassenden Glasperlmühle werden 13,5 Teile synthetischer LONZA-Graphit T-44® (Firma LONZA AG) mit einer mittleren Teilchengrösse von < 44 µm und als Texturschutzmittel 1 Teil REOPLAST 39® (Firma CIBA-GEIGY AG) in 125 Teilen Wasser verrührt. Man gibt 400 Vol.-Teile Glaskugeln mit einem Teilchendurchmesser von 3,5-4,0 mm zur Suspension und mahlt die Mischung während 9 Stunden ohne Aussenkühlung bei einer Rührgeschwindigkeit von 320 U/Minuten. Die Graphitsuspension wird von den Glaskugeln abgetrennt, welche mit Wasser etwas nachgewaschen werden, dann abfiltriert. Man wäscht den Presskuchen mit Wasser und trocknet ihn bei 70-80 °C im Vakuumschrank. Man erhält 13,0 Teile eines grauen, ca. 7 Gew.-% Texturschutzmittel enthaltenden Graphits, welcher nach dem Pulverisieren in einwandfreier Dispergierbarkeit in Lacken applizierbar ist. Rasterelektronenmikroskopische Aufnahmen des so konditionierten Graphitpulvers zeigen Partikel mit einem ausgeprägten schuppen- bis plättchenförmigen Habitus.

b) 25,2 Teile Dynapol H 700® (60 %-ig in Solvesso 150®, Dynamit Nobel),

2,7 Teile Maprenal MF 650® (55-%ig in Butanol, Hoechst AG)

15,5 Teile Celluloseacetobutyrat 531.1® (25 %-ig in Xylol/Butylacetat 1 : 2, Eastmen Chemical International)

1,1 Teile Irganol TZ6® (Ciba-Geigy)

23,3 Teile Butylacetat

11,6 Teile Xylol

11,6 Teile Solvesso 150® (ESSO)

4,5 Teile C.I. Pigment Rot 177 und

4,5 Teile des gemäss Beispiel 2a nachbehandelten LONZA Graphits

werden in einer Kugelmühle während 96 Stunden gut vermischt, wobei das Pigment und der Graphit im Lackmedium fein dispergiert werden. Der Lack wird danach mit dem obigen Lösungsmittelgemisch Butylacetat/Xylol/Solvesso auf eine Auslaufviskosität von ca. 18 sec. (20 °C) nach DIN 4 verdünnt und darauf auf ein Metallblech appliziert. Nach kurzem Ablüften (2 Minuten bei ca. 40 °C) wird diese pigmentierte Erstschichtlackierung mit einer unpigmentierten Zweitschichtlackierung bestehend aus

58,3 Teilen Viacryl VC 373® (60 %-ig in Xylol, Vianora)

27,3 Teilen Maprenal MF 590® (55 %-ig in Butanol, Hoechst)

1,0 Teilen Siliconöl A® (1 %-ig in Xylol, Bayer)

1,0 Teilen Tinuvin 900® (Ciba-Geigy)

5,4 Teilen Xylol

4,0 Teilen Solvesso 150® (ESSO) und

3,0 Teilen Aethylenglykolacetat

überdeckt, 30 Minuten bei 40 °C abgelüftet und dann während 30 Minuten bei 135 °C eingebrannt.

Man erhält eine metallisch schimmernde, rote Lackschicht mit ausgezeichneten Echtheiten. Sie weist einen hohen Glanz und sehr guten Verlauf sowie eine ausgezeichnete Verteilung der Pigmente auf. Beim Bestrahlen der Lackschicht mit Licht aus einer künstlichen Lichtquelle oder der Sonne erkennt man ein deutliches Glitzern, welches durch die im Lack vorhandenen Graphitpartikel hervorgerufen wird.

## Patentansprüche

1. Einbrennlackeffektschicht mit einem Metallic-Effekt ohne Mitverwendung von Metallteilchen, dadurch gekennzeichnet, dass sie 0,001 bis 30 Gew.-% von einem oder mehreren organischen Pigmenten oder polymerlöslichen Farbstoffen und 0,001 bis 30 Gew.-% Graphit, bezogen auf die trockene Lackschicht, enthält.

2. Einbrennlackeffektschicht gemäss Anspruch 1, worin der Graphit einen Kohlenstoffgehalt von mindestens 99 % hat.

3. Einbrennlackeffektschicht gemäss Anspruch 1, worin der Graphit in Schuppen- oder Plättchenform mit einem Durchmesser von bis 20 µm und einer Dicke von bis 4 µm vorliegt.

4. Einbrennlackeffektschicht gemäss Anspruch 1, worin die Graphitmenge 1,0 bis 15,0 Gew.-%, bezogen auf die trockene Lackschicht, beträgt.

5. Einbrennlackeffektschicht gemäss Anspruch 1, worin das organische Pigment ein transparentes Pigment ist.

6. Einbrennlackeffektschicht gemäss Anspruch 1, worin das organische Pigment oder der Farbstoff in einer Menge von 0,1 bis 15,0 Gew.-%, bezogen auf die trockene Lackschicht, vorliegt.

7. Einbrennlackeffektschicht gemäss Anspruch 1, worin das organische Pigment ein für die Herstellung von Automobillacken geeignetes Pigment ist.

8. Einbrennlackeffektschicht gemäss Anspruch 1, worin der polymerlösliche Farbstoff ein 1 : 2-Chrom- oder 1 : 2-Kobaltkomplex von Monoazofarbstoffen ist.

9. Einbrennlackeffektschicht gemäss Anspruch 1, worin mit Stearinsäure, Stearylamin, hydrierter Abietinsäure, epoxidiertem Sojabohnenöl oder mit einem 1,2-Diol behandelter Graphit vorliegt.

10. Einbrennlackeffektschicht gemäss Anspruch 1, worin der Lack ein Acryl-Melamin-, Alkyd-Melamin- oder ein thermoplastisches Acrylharz ist.

11. Einbrennlackeffektschicht gemäss Anspruch 1, die mit einer Klarlackschicht überzogen ist.

12. Verwendung der Einbrennlackeffektschicht gemäss Anspruch 1 zum Färben von Metalloberflächen.

## Claims

1. A stoving-lacquer effect coating having a metallic effect obtained without the use of metal particles, which coating contains 0.001 to 30 % by weight of one or more organic pigments or polymer-soluble dyes, and 0.001 to 30 % by weight of graphite, based on the dry lacquer coating.

2. A stoving-lacquer effect coating according to claim 1, wherein the graphite has a carbon content of at least 99 %.

3. A stoving-lacquer effect coating according to claim 1, wherein the graphite is in flake- or lamella-form with a diameter of up to 20 µm and a thickness of up to 4 µm.

4. A stoving-lacquer effect coating according to claim 1, wherein the amount of graphite is 1.0 to 15.0 % by weight, based on the dry lacquer coating.

5. A stoving-lacquer effect coating according to claim 1, wherein the organic pigment is a transparent pigment.

6. A stoving-lacquer effect coating according to claim 1, wherein the organic pigment or the dye is present in an amount of 0.1 to 15.0 % by weight, based on the dry lacquer coating.

7. A stoving-lacquer effect coating according to claim 1, wherein the organic pigment is a pigment suitable for producing motor car lacquers.

8. A stoving-lacquer effect coating according to claim 1, wherein the polymer-soluble dye is a 1 : 2-chromium or 1 : 2-cobalt complex of mono-azo dyes.

9. A stoving-lacquer effect coating according to claim 1, wherein graphite treated with stearic acid, stearylamine, hydrogenated abietic acid, epoxidised soyabean oil or a 1,2-diol is present.

10. A stoving-lacquer effect coating according to claim 1, wherein the lacquer is an acrylic-melamine or alkyd-melamine or a thermoplastic acrylic resin.

11. A stoving-lacquer effect coating according to claim 1, which is covered with a clear lacquer coating.

12. Use of a stoving-lacquer effect coating according to claim 1 for dyeing metal surfaces.

## Revendications

1. Couche à effet de vernis au four (vernis à cuire) présentant un effet métallique sans la présence de particules métalliques, couche caractérisée en ce qu'elle contient de 0,001 à 30 % en poids d'un ou de plusieurs pigments organiques ou de colorants solubles dans des polymères et de 0,001 à 30 % en poids de graphite par rapport à la couche de vernis sèche.

2. Couche selon la revendication 1 dont le graphite a une teneur en carbone d'au moins 99 %.

3. Couche selon la revendication 1 dans laquelle le graphite est sous la forme d'écailles ou de paillettes d'un diamètre pouvant aller jusqu'à 20 μm et d'une épaisseur pouvant aller jusqu'à 4 μm.

4. Couche selon la revendication 1 dont la teneur en graphite est de 1,0 à 15 % du poids de la couche de vernis sèche.

5. Couche selon la revendication 1 dont le pigment est un pigment transparent.

6. Couche selon la revendication 1 dans laquelle le pigment organique ou le colorant se trouve dans une proportion de 0,1 à 15,0 % du poids de la couche de vernis sèche.

7. Couche selon la revendication 1 dont le pigment organique est un pigment pour la fabrication de vernis ou peintures d'automobiles.

8. Couche selon la revendication 1 dans laquelle le colorant soluble dans des polymères est un complexe de chrome ou de cobalt 1 : 2 de colorants monoazoïques.

9. Couche selon la revendication 1 dont le graphite a été traité avec de l'acide stéarique, de la stéarylamine, de l'acide abiétique hydrogéné, une huile de soja époxydée ou un diol-1,2.

10. Couche selon la revendication 1 dont le vernis est une résine acrylique-mélamine, alkyde-mélamine ou une résine acrylique thermoplastique.

11. Couche selon la revendication 1 revêtue d'une couche de vernis claire.

12. Emploi d'une couche à effet de vernis à cuire selon la revendication 1 pour colorer des surfaces métalliques.